# EUROPÄISCHE PATENTSCHRIFT

(11) **EP 3 366 963 B1**
(45) Veröffentlichungstag und Bekanntmachung des Hinweises auf die Patenterteilung: **14.12.2022**
(21) Anmeldenummer: 17157634.1
(22) Anmeldetag: 23.02.2017
(51) Int. Cl.: F16K 41/04, F16J 15/18

(54) **ABDICHTSYSTEM EINER EINRICHTUNG ZUM DURCHLASSEN EINES MEDIUMS INSBESONDERE IM HOCHDRUCKBEREICH**
SEALING SYSTEM FOR A FLUID REGULATING DEVICE SPECIALY FOR HIGH PRESSURE RANGES.
SYSTÈME D'ÉTANCHÉITÉ POUR UN DISPOSITIF DE RÉGULATION DE FLUIDE SPÉCIALEMENT EN HAUTE PRESSION.

(43) Veröffentlichungstag der Anmeldung: 29.08.2018
(73) Patentinhaber: ALLFI AG, 6370 Stans (CH)
(72) Erfinder: Troxler, Beat, 6026 Rain (CH)
(74) Vertreter: Luchs, Willi

(56) Entgegenhaltungen:
- WO-A1-98/19089
- WO-A1-2013/109474
- CN-A- 103 939 620
- CN-A- 105 156 738
- CN-U- 203 585 354
- CN-U- 204 107 778
- US-A- 2 622 839
- US-A1- 2003 122 376
- US-A1- 2005 242 314
- US-A1- 2008 019 851

## Beschreibung

Die Erfindung betrifft ein Abdichtsystem einer Einrichtung zum Durchlassen eines Mediums insbesondere im Hochdruckbereich nach Anspruch 1.

Derartige Abdichtsysteme eignen sich für Einrichtungen, wie Flüssigkeits-Schneidköpfe, Hochdruckventile, Drehgelenke, Pumpen oder ähnlichem, die mit einem Medium unter einem Druck von insbesondere mehreren 1000 bar arbeiten. Ein typischer Anwendungsbereich sind Einrichtungen zum Schneiden von Gegenständen mit einem mit hohem Druck versehenen Wasserstrahl.

Die Abdichtung der beweglichen Bauteile in derartigen Einrichtungen, wie etwa die hin- und herbewegbare Ventilnadel in einem Schneidkopf oder in einem Hochdruckventil oder das jeweils rotierende Wellenrohr in Drehgelenken, erfolgt in der Regel mit Kunststoffdichtungen, die sowohl eine möglichst leckfreie Dichtwirkung als auch eine geringe Reibung und eine lange Lebensdauer aufweisen sollen. Dabei wird versucht, mit geeigneten Geometrien die Extrusion der relativ weichen Dichtelemente in den Dichtspalt zu minimieren.

Bei den bisher bekannten Abdichtsystemen dieser Art werden entweder Stopfbüchsen oder Dichtelemente mit O-Ringen eingesetzt. Im ersten Fall werden Dichtelemente aus Kunststoff oft mit unterschiedlicher Härte zwischen zwei Stützringen vorgespannt. Sie bieten zwar den Vorteil einer leckagefreien Abdichtung des Bauteils, haben allerdings den Nachteil, dass bereits ein geringer Verschleiss die Undichtigkeit des Systems zur Folge haben kann. Das Dichtelement muss deshalb oft nachgespannt werden, wobei die Vorspannung grosse Reibkräfte erzeugt, die den Verschleiss erhöhen und die Funktionsfähigkeit der Einrichtung beeinträchtigen.

Im Dokument CN 105 156 738 ist ein Ventil mit einem Ventilkörper, einem darin bewegbaren Kolben, einem Spindelventil, einem Nadelventil und einem von letzterem verschliessbaren Ventilsitz vorgesehen. Es ist ausserdem eine oberhalb des Kolbens befindliche Lagerhülse, eine darin enthaltende Feder und das mit diesen zusammenwirkende Spindelventil angeordnet. In der dieses Nadelventil umgebenden Kammer ist beim Ventilkörper eine das Nadelventil umschliessende Ringdichtung angedeutet.

Dokument CN 103 939 620 offenbart ein Abdichtsystem nach dem Oberbegriff des Anspruchs 1.

Beim Dokument CN 103 939 620 ist ein Ultrahochdruck-Hochtemperatur-Nadelventil offenbart, das im Wesentlichen einen Ventilkörper, eine Ventilnadel, eine Rollkugel, eine Gewindestange mit einem Handgriff, einen Fluidzuflusskanal, einen Fluidabflusskanal und einen Dichtring umfasst. Im Ventilkörper ist eine vertikale Bohrung ausgebildet, in welcher die Ventilnadel durch diesen Dichtring abgedichtet geführt ist. Zudem ist am oberen Teil des Dichtrings eine nabenförmige Dichthülse angeordnet. Bei der Publikation US 2005/0242314 A ist eine Nadelventilanordnung für Sauerstoffverdichter offenbart, bei der ein Nadelkörper in einem Ventilkörper durch ein Schraubgewinde verdrehbar gehalten ist und unten in eine Fliesskammer ragt und eine Auslasspassage öffnen bzw. verschliessen kann. Es ist eine den Nadelkörper oberhalb der Fliesskammer integral umgebende Lippendichtung vorgesehen.

Im Dokument CN 203585354U ist eine Dichtungsstruktur mit einem Ventilkörper mit einer Ventilbohrung und einem im Ventilkörper verschiebbaren Nadelventil für eine Hochdruckeinspritzung vorgesehen. Die Ventilbohrung ist mit einer kegelförmigen Verjüngung versehen, in der eine gleichgeformte Dichtung einsetzbar ist. Diese Dichtung ist von einer im Ventilkörper einschraubbaren Presshülse in der Ventilbohrung eindrückbar.

In der Druckschrift CN 204107778 U ist eine Nadelventileinrichtung für Geräte zum Auftragen von Gummi offenbart. Diese Einrichtung besteht aus einem mehrteiligen Ventilkörper , einer darin längsgeführten Ventilnadel, einen mit dieser verbundenen Antriebskolben mit einer die Ventilnadel in Schliessrichtung wirkenden Druckfeder und einer Zuführkammer mit einem Auslass. Die Ventilnadel ist oberhalb der Zuführkammer mit einer Ringdichtung umschlossen, welche von einem verstellbaren Druckring in den einen Hülsenteil des Ventilkörpers eindrückbar ist.

Die Druckschrift WO 2013/109474 bzw. US 2008/0019851 bezieht sich auf eine Abdichtung bei Hochdruck-Systemen, bei dem eine Anordnung erläutert ist, bei der ein Kolben in einer Bohrung eines Zylinders oszillierend angeordnet ist. Eine Dichtungsanordnung weist einen Dichtungsträger auf, der durch seitlich angeordnete Zugstangen gegen den Zylinder und die Dichtung gegen den Kolben angepresst werden kann. Der Zylinder ist durch eine statische Dichtung entlang einem tangentialen Dichtungsbereich gegen den Dichtungsträger angedrückt. Dieser Dichtungsträger ist vorzugsweise aus rostfreiem Stahl hergestellt, indes die Dichtung aus Bronze, Al oder ähnlichem gefertigt ist. Es ist ferner eine Ringdichtung als O-Ring vorgesehen.

Ebenso ist bei der Druckschrift US 2003/0122376 eine dichtungslose Verbindung zwischen Metallkomponenten von ultrahohen Drucksystemen offenbart, bei der die Anordnung wiederum ähnlich wie bei der Dichtung zwischen dem Zylinder und dem Dichtungsträger durch diesen Dichtungsbereich wie oben erläutert vorgesehen ist.

Im Dokument WO 98/19089 ist ein Radiatorenheizungsventil dargetan, welches ein Gehäuse, ein in diesem durch eine Öffnung ragender längsbeweglicher Stössel und ein Ventilsitz zum Öffnen oder Schliessen des Ventils aufweist. Für die Abdichtung ist zwischen dem Gehäuse und dem Stössel bei der Öffnung eine O-Ringdichtung vorgesehen, durch welche ein Austritt des im Ventil befindlichen Druckwassers verhindert wird.

Bei dem Dokument US 2,622,839 ist bei einem Wasserhahn ein Gehäusekörper mit einer vertikalen Bohrung vorgesehen, durch welche ein höhenverstellbarer Griff mit einem Schaft ragt. Eine obere Muffe mit einem den Schaft umschliessenden Dichtungsring bewirkt eine Undurchlässigkeit des durch den Wasserhahn fliessenden Flüssigkeit. Ausserdem ist eine ringförmige Rippe bei der oberen Stirnseite der Nabe des Gehäusekörpers angeordnet, welche mit einer entsprechenden Ringnut unterseitig der Muffe zusammenwirkt, so dass beim Eindrehen der Muffe in diese Nabe eine Ringdichtung entsteht.

Beim Einsatz vom Dichtelementen mit O-Ringen wird eine Weichdichtung aus Kunststoff mit einem O-Ring vorgespannt. Letzterer dient als äussere Abdichtung, wobei die Extrusion mit Hilfe der atmosphärseitigen Stützscheibe begrenzt wird, während der Flüssigkeitsdruck die Verspannung des Dichtelements übernimmt. Es ist bei derartigen Abdichtsystemen von Vorteil, dass sich die Dichtung bei Abnützung bis zu einem gewissen Grad selber nachstellt. Darüberhinaus ist die Vorspannung des Dichtelements druckabhängig. Nachteilig ist allerdings, dass keine leckagefreie Abdichtung insbesondere bei den hohen Drücken garantiert ist.

Die Erfindung liegt die Aufgabe zugrunde, diese Nachteile zu beheben und ein Abdichtsystem der eingangs genannten Art zu schaffen, das mit einfachen Mitteln und möglichst geringem Bearbeitungsaufwand die sichere Abdichtung des in der Bohrung oszillierenden Bauteiles bei den hohen Drücken des zu steuernden Mediums sicherstellt.

Diese Aufgabe ist erfindungsgemäss durch die Merkmale des Anspruchs 1 gelöst.

Es ist erfindungsgemäss eine zusätzliche Metalldichtung von dem Gehäuse und einer den Bauteil umgebenden Druckscheibe gebildet.

Damit ist der Aussenbereich nach dem Dichtelement dicht abgeschlossen.

Auf diese Weise wird das Dichtelement aussen komplett dicht eingekapselt. Die Abdichtstelle an seinem Aussendurchmesser entfällt und seine Dichtwirkung beschränkt sich auf den unproblematischeren Innendurchmesser zwischen der Druckscheibe oder dem Gehäuse und dem darin oszillierenden Bauteil.

Ein weiterer erheblicher Vorteil besteht darin, dass das Dichtelement aufgrund seiner Beaufschlagung mit dem Medium selbsttätig durch den Flüssigkeitsdruck vorgespannt wird.

Erfindungsgemäß ist es im Sinne einer einfachen Bearbeitung der Abdichtung zweckmässig, wenn die Metalldichtung durch zwei sich gegenüberstehende Dichtflächen des Gehäuses und der Druckscheibe gebildet ist.

Die Erfindung sieht in einer ersten Variante vor, dass die sich gegenüberstehenden Dichtflächen des Gehäuses und der Druckscheibe in einem Winkel von vorzugsweise 30° bis 60° zur Längsachse der Bohrung geneigt sind.

Bei einer alternativen Variante sind sie mit einem Winkel von nahezu 90° senkrecht zur Längsachse der Bohrung ausgerichtet. Beide Ausführungen sind fertigungstechnisch vorteilhaft. Selbstverständlich können aber auch andere Neigungswinkel vorgesehen sein.

Die Erfindung sieht ausserdem vor, dass das Dichtelement ringförmig ist und konisch auslaufende Stirnseiten aufweist, deren Konizität so bemessen ist, dass das Dichtelement dichtend gegen eine entsprechend konisch ausgebildete Abstützfläche der Druckscheibe andrückbar ist. Das Dichtelement ist zweckmässigerweise als Weichdichtung aus Kunststoffmaterial hergestellt. Seine konische Stirnseite sorgt dann für einen grossen Nachstellbereich der Weichdichtung, die bei Verschleiss vom Flüssigkeitsdruck zur Erhaltung der Dichtfunktion weiter in den Konus gedrückt wird.

Das ringförmige Dichtelement kann auch mit annähernd senkrecht zur Längsachse der Bohrung ausgerichteten Stirnseiten versehen sein. Dementsprechend ist dann die Stützfläche der Druckscheibe auch senkrecht zur Längsachse der Bohrung ausgerichtet.

Das erfindungsgemässe Abdichtsystem eignet sich besonders für Hochdruckventile zum Abdichten der in der Führungsbohrung oszillierenden Ventilnadel des Ventils.

Die Erfindung wird nachfolgend unter Bezugnahme auf die Zeichnung näher erläutert. Es zeigen:
- Fig. 1: einen Längsschnitt eines erfindungsgemässen Abdichtsystems eines Hochdruckventils als Einrichtung;
- Fig. 2: einen teilweisen Längsschnitt des Abdichtsystems des Hochdruckventils nach Fig. 1;
- Fig. 3: eine Einzelheit der Metalldichtung nach Fig. 2, vergrössert dargestellt,
- Fig. 4: einen teilweisen Längsschnitt eines nicht erfindungsgemässen Abdichtsystems eines Schneidkopfs als Einrichtung; und
- Fig. 5: einen Längsschnitt eines nicht erfindungsgemässen Abdichtsystems eines Drehgelenks als Einrichtung.

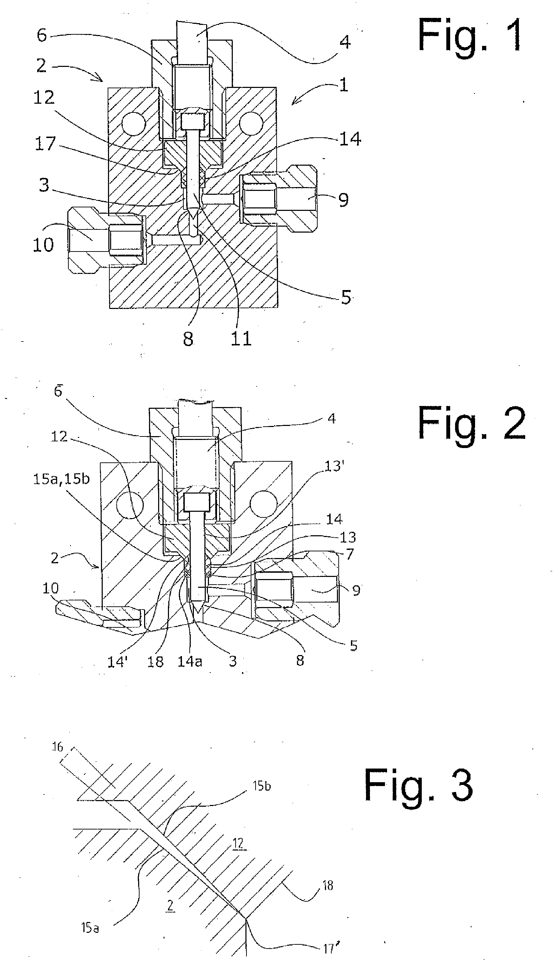

Fig. 1 und Fig. 2 zeigen eine Einrichtung eines als Spindelventil arbeitenden Hochdruckventils 1, weiches zum Beispiel für einen Schneidkopf mit einer Wasserdüse zum Schneiden von Materialien mit einem unter Hochdruck stehenden Wasserstrahl verwendbar ist.

Dieses Hochdruckventil 1 besteht aus einem Gehäuse 2 mit einer Drucckammer 3, einer Spindelmutter 6 mit einem als Ventilnadel 5 vorgesehenen Bauteil sowie einer von Hand oder maschinell, zum Beispiel pneumatisch betätigbaren Spindel 4, mittels denen die Ventilnadel 5 gegen einen Ventilsitz 8 im Gehäuse 2 andrückbar ist. Das Gehäuse 2 weist ausserdem einen Wasserein- 9 und -auslass 10 oder umgekehrt auf, die bei offenem Ventil über einen Kanal 11 miteinander verbindbar sind. Zudem ist im Gehäuse 2 eine Druckscheibe 12 mit einer Bohrung 13' zum Führen der Ventilnadel 5 beim Schliessen und Öffnen des Hochdruckventils angeordnet.

Bei dem erfindungsgemässen Abdichtsystem ist zwischen der Drucckammer 3 und der Druckscheibe 12 in der im Gehäuse 2 vorgesehenen Bohrung 13 ein die Ventilnadel 5 umgebendes Dichtelement 14 in Gestalt einer ringförmigen Weichdichtung aus Kunststoff angeordnet und zusätzlich ist der Aussenbereich 14' des Dichtelements 14 durch eine Metalldichtung 17 dicht abgeschlossen.

Diese Metalldichtung 17 ist mit sich gegenüberstehenden Dichtflächen 15a, 15b des Gehäuses 2 und der auf dieses angedrückten Druckscheibe 12 bewerkstelligt. Somit entfällt die sonst erforderliche Abdichtstelle am Aussendurchmesser des Dichtelementes, und die Abdichtfunktion des Dichtelements 14 beschränkt sich primär auf den unproblematischeren Innendurchmesser der Weichdichtung.

Diese Dichtflächen 15a, 15b sind vorteilhaft in einem Neigungswinkel von vorzugsweise 30° bis 60°, beispielsweise wie dargestellt 45°, zur Längsachse der Führungsbohrung 13 angeordnet. Das Dichtelement 14 weist seinerseits konisch auslaufende Stirnseiten auf, deren Konizität so ausgebildet ist, dass sie dichtend gegen eine entsprechend konisch ausgebildete Abstützfläche 18 der Druckscheibe 12 andrückbar sind. Dadurch ist es möglich, die Dichtung innerhalb eines grösseren Bereiches nachzustellen, indem der Flüssigkeitsdruck bei Verschleiss das Dichtelement 14 zur Erhaltung der Dichtfunktion weiter in der Konus hineindrückt. Der Neigungswinkel kann aber auch je nach Einzelfall innerhalb bestimmter Grenzen variieren.

Gemäss Fig. 2 ist dem Dichtelement 14 bei der die Druckkammer 3 begrenzenden Stirnseite ein Verstärkungselement, vorzugsweise ein Metallring 7, zugeordnet. Damit ist der Aussenbereich 14' des Dichtelementes 14 vor der hohen Strömungsgeschwindigkeit des durchfliessenden Fluids geschützt.

Gemäss Fig. 3 weichen die Neigungswinkel der Dichtflächen 15a, 15b voneinander um einen kleinen Winkelbetrag 16 ab, damit die Metalldichtung 17 innenseitig in der Form einer kreisförmigen Dichtkante 17' erzeugt ist. Durch die auf diese Weise hergestellte Metalldichtung kann eine plastische Verformung der Materialien bei dieser Dichtkante 17' erzielt werden und somit ist das Dichtelement 14 aussen komplett dicht eingekapselt und es ist eine einwandfreie Dichtung auch bei höchsten Drücken dauerhaft gewährleistet.

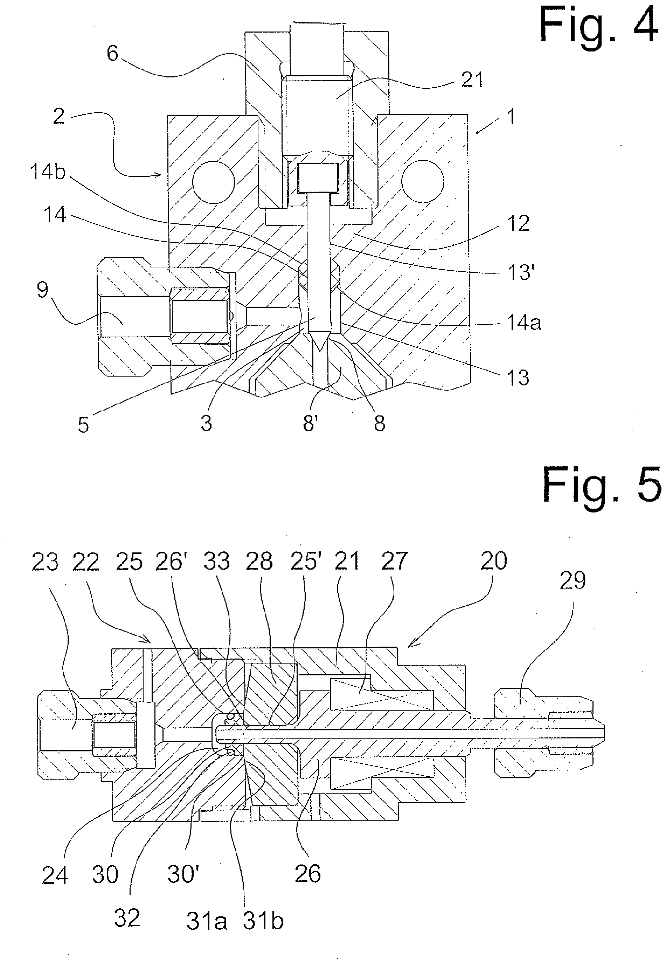

Das nicht erfindungsgemässe Abdichtsystem gemäss Fig. 4 unterscheidet sich von demjenigen nach Fig. 1 lediglich dadurch, dass bei ihr das Gehäuse 2 und die Druckscheibe quasi aus einem einzigen Stück hergestellt sind und demzufolge das Gehäuse 2 selbst diese das Bauteil bildende Ventilnadel 5 umgibt und lagert. Dies vereinfacht die Fertigung dieser Teile und es entfällt auch die Funktion der Spindelmutter 6 als Stütz- und Andrückmittel der Druckscheibe 12 gegen die Gegenfläche des Gehäuses. Das Dichtelement 14 ist ringförmig mit konisch auslaufenden Stirnseiten 14a, 14b ausgebildet, wobei der Aussenbereich bei der Stirnseite 14b in den Innenbereich bei der Ventilnadel 5 übergeht und damit eine optimale Dichtung erzielt wird.

Das Dichtelement 14 ist in die zylindrische Bohrung 13 des Gehäuses 2 sowohl aussen als auch innen auf das Bauteil 5 vorteilhaft eingepresst. Mit seiner unteren Stirnseite 14a begrenzt es die Druckkammer 3, so dass es im Betriebszustand vom Medium beaufschlagt ist. Ein von dem Gehäuse 2 entfernbarer bzw. auswechselbarer Ventilsitzblock 8' mit dem Ventilsitz 8 für die Ventilnadel ermöglicht ein Einschieben des Dichtelements 14 in die Bohrung 13, wenn diese entfernt ist. Dieser Ventilsitzblock 8' ist nur teilweise veranschaulicht.

Das in Fig. 5 gezeigte Drehgelenk 20 ist Bestandteil einer Einrichtung, die nicht Teil der Erfindung ist, mit einem unter hohem Druck stehenden Wasserstrahl vorzugsweise zum Reinigen von Gegenständen oder für die Anwendung bei Robotern zum Schneiden von Gegenständen, bei der häufige Drehbewegungen erfolgen. Dieses Drehgelenk 20 besteht im Wesentlichen aus einem mehrteiligen Gehäuse 22 mit einem Gehäusedeckel 21, einem Wassereinlass 29 und einer Druckkammer 24 sowie darüberhinaus aus einem in einer Bohrung 25' geführten Wellenrohr 26 mit einem Kugellager 27, einer Druckscheibe 28, einem Verbindungsglied 23 und einem Dichtelement 30, das in einen erweiterten Bereich der Bohrung 25 eingelegt ist.

Eine zusätzliche Metalldichtung 33 ist von dem Gehäuse 22 und dieser den hülsenförmigen Bauteil 26' umgebenden Druckscheibe 28 gebildet und damit ist der Aussenbereich 30' nach dem Dichtelement 30 dicht abgeschlossen.

Das Dichtelement 30 ist vorteilhaft ebenso als Weichdichtung aus Kunststoffmaterial hergestellt. Die Metalldichtung 33 ihrerseits ist durch zwei sich gegenüberstehende Dichtflächen 31a, 31b des zylindrischen Gehäuseteils und der Druckscheibe 28 gebildet. Zweckmässigerweise sind die Neigungswinkel der Dichtflächen 31a, 31b ebenso um einen kleinen Winkelbetrag voneinander abweichend angeordnet, damit innenseitig die Bildung einer kreisförmigen Dichtkante gebildet ist. Zudem ist die Druckscheibe 28 nach aussen kegelförmig ausgebildet.

Im Unterschied zu der Metalldichtung 17 nach Fig. 1 verlaufen die Dichtflächen 31a, 31b um nahezu 90° zur Längsachse der Bohrung 25. Ein weiterer Unterschied besteht darin, dass die Kontaktflächen des Dichtelements 30 und der Druckscheibe 28 nicht konisch, sondern ebenfalls annährend senkrecht zur Längsachse der Bohrung 25 geneigt sind.

Das Dichtelement 30 ist zusätzlich mit einem aussen angeordneten O-Ring 32 als Hilfsdichtung ausgestattet, um alternativ eine zusätzliche Aussenabdichtung zu der Metalldichtung zu bilden.

Das hülsenförmige Bauteil 26' des Wellenrohrs ist vorteilhaft aussen mit einer Beschichtung versehen, damit es in der Bohrung 25' besser gleitet. Es wird vorzugsweise eine PVD oder PACVD (Plasma Assisted Chemical Vapour Deposition) basierende Beschichtung verwendet.

Im Prinzip könnte auch das als Ventilnadel vorgesehene Bauteil 5 und/oder die dieses jeweilige Bauteil führende Bohrung 13', 25' der Druckscheibe 12, 28 bzw. des Gehäuses 2 mit dieser Beschichtung versehen sein.

Die Erfindung ist mit den oben erläuterten Ausführungsbeispielen ausreichend dargetan. Sie könnte aber selbstverständlich noch mit weiteren Varianten erläutert sein, wie zum Beispiel für eine Kolbenabdichtung einer Hochdruckpumpe, bei der als Bauteil ein hin- und herbeweglicher Kolben vorgesehen ist.

Diese erfindungsgemässen Abdichtsysteme sind besonders geeignet für bewegliche Bauteile, die eher kleine Durchmesser von nur einigen Millimetern aufweisen und mit durchzulassenden Medien mit einem besonders hohen Druck von mehreren tausend bar arbeiten müssen. Das Abdichtsystem hat sich in der Praxis insbesondere bei Drücken ab 4000 bar sehr bewährt. Es ist mit Drücken über 6200 bar belastbar und könnte theoretisch bis über 10'000 bar belastet werden.

## Patentansprüche

1. Abdichtsystem einer Einrichtung zum Durchlassen eines Mediums insbesondere im Hochdruckbereich, mit einem eine Bohrung (13) aufweisenden Gehäuse (2), einem darin oszillierend gelagerten Bauteil (5) und mit einer in der Bohrung (13) gebildeten mit dem Medium beaufschlagbaren Druckkammer (3), wobei eine zusätzliche Dichtung (17) von dem Gehäuse (2) und einer den Bauteil (5) umgebenden Druckscheibe (12) gebildet ist, wobei das in der Bohrung (13) oszillierbare Bauteil (5) als eine Ventilnadel ausgebildet und gegen einen Ventilsitz (8) im Gehäuse (2) andrückbar ist und in diesem angedrückten Schliesszustand die Druckkammer (3) zwischen dem Gehäuse (2) mit der Bohrung (13), dem Bauteil (5) und einem das Bauteil (5) umgebenden Dichtelement (14) gebildet ist, wobei die zusätzliche Dichtung (17) durch zwei sich gegenüberstehende Dichtflächen (15a, 15b) des Gehäuses (2) und der Druckscheibe (12) gebildet ist, **dadurch gekennzeichnet, dass**
die zusätzliche Dichtung (17) eine Metalldichtung (17) ist, und dass eine Neigungswinkel der Dichtflächen voneinander um einen kleinen Winkelbetrag (16) abweichen, wodurch innenseitig die Bildung einer kreisförmigen Dichtkante (17') bewirkt wird.

2. Abdichtsystem nach Anspruch 1, **dadurch gekennzeichnet, dass** das Dichtelement (14) in die zylindrische Bohrung (13) des Gehäuses (2) vorzugsweise eingepresst ist und mit seiner einen Stirnseite (14a) die Druckkammer (3) begrenzt, so dass es im Betriebszustand vom Medium beaufschlagt ist.

3. Abdichtsystem nach Anspruch 1, **dadurch gekennzeichnet, dass** das Dichtelement (14) ringförmig mit konisch auslaufenden Stirnseiten ausgebildet ist, deren Konizität so bemessen ist, dass das Dichtelement dichtend gegen eine entsprechend konisch ausgebildete Abstützfläche (18) der Druckscheibe (12) andrückbar ist.

4. Abdichtsystem nach einem oder mehreren der Ansprüche 1 bis 3, **dadurch gekennzeichnet, dass** das Dichtelement (14) als Weichdichtung aus einem Kunststoffmaterial hergestellt ist.

5. Abdichtsystem nach einem der Ansprüche 1 bis 4, **dadurch gekennzeichnet, dass** das Dichtelement (14) bei dem Gehäuse (2), welches das Bauteil (5) selbst umgibt, durch die Druckkammer (3) in die Bohrung (13) eingeschoben ist, wobei zu diesem Zwecke das Gehäuse (2) durch einen Ventilsitzblock (8') bei der Bohrung (13) geöffnet werden kann.

6. Abdichtsystem nach Anspruch 1, **dadurch gekennzeichnet, dass** die sich gegenüberstehenden Dichtflächen (15a, 15b) in einem Winkel von vorzugsweise 30° bis 60° zur Längsachse der Bohrung (13) geneigt sind.

7. Abdichtsystem nach einem oder mehreren der Ansprüche 1 bis 6, **dadurch gekennzeichnet, dass**
dem Dichtelement (14) bei der die Druckkammer (3) begrenzenden Stirnseite ein Verstärkungselement, vorzugsweise ein Metallring (7), zugeordnet ist, damit der Aussenbereich (14a) des Dichtelementes (14) geschützt ist.

8. Abdichtsystem nach einem der Ansprüche 1 bis 7, **dadurch gekennzeichnet, dass**
das beweglich gelagerte Bauteil (5) und/oder die dieses führende Bohrung (13') der Druckscheibe (12) bzw. des Gehäuses (2) mit einer Beschichtung versehen sind.

9. Abdichtsystem nach Anspruch 8, **dadurch gekennzeichnet, dass** eine PVD oder PACVD basierende Beschichtung verwendbar ist.

## Claims

1. A sealing system of a device for allowing the passage of a medium, in particular in the high pressure range, comprising a housing (2) that has a bore hole (13), a component (5) mounted within said housing such as to oscillate with a pressure chamber (3) formed within the bore hole (13), which can be charged with the medium, whereby an additional seal (17) is formed by the housing (2) and a pressure disc (12) surrounding the component (5), whereby the component (5), which can be oscillated in the bore hole (13), is formed as a valve needle and pressable against a valve seat (8) in the housing (2), and in this pressed closed state the pressure chamber (3) is formed between the housing (2) with the bore hole (13), the component (5) and a sealing element (14) surrounding the component (5), whereby the additional seal (17) is formed by two opposing sealing surfaces (15a, 15b) of the housing (2) and of the pressure disc (12), **characterised in that**
the additional seal (17) is a metal seal (17) and that an angle of inclination of the sealing surfaces differing from one another by a small angular amount (16), by means of which the formation of a circular sealing edge (17') is brought about on the inside.

2. The sealing system according to Claim 1, **characterised in that**
the sealing element (14) is preferably pressed into the cylindrical bore hole (13) of the housing (2) and borders the pressure chamber (3) with it one front side (14a), so that it is charged with medium in the operational state.

3. The sealing system according to Claim 1, **characterised in that**
the sealing element (14) is formed annularly with conically tapering front sides, the conicity of which is such measured that the sealing element can be pressed against a correspondingly conically formed support surface (18) of the pressure disc (12) such as to form a seal.

4. The sealing system according to one or more of Claims 1 to 3, **characterised in that**
the sealing element (14) is produced as a soft seal made of plastic material.

5. The sealing system according to any one of Claims 1 to 4, **characterised in that**
in the housing (2), which itself surrounds the component (5, 26), the sealing element (14) is pushed through the pressure chamber (3) into the bore hole (13), whereby for this purpose the housing (2) being able to be opened by a valve seat block (8') by the bore hole (13).

6. The sealing system according to Claim 1, **characterised in that**
the opposing sealing surfaces (15a, 15b) are inclined at an angle of preferably 30° to 60° to the longitudinal axis of the bore hole (13).

7. The sealing system according to one or more of Claims 1 to 6, **characterised in that**
a reinforcement element, preferably a metal ring (7), is assigned to the sealing element (14) on the front side bordering the pressure chamber (3) so that the outer region (14a) of the sealing element (14) is protected.

8. The sealing system according to any one of Claims 1 to 7, **characterised in that**
the moveably mounted component (5) and/or the bore hole (13') of the pressure disc (12) or of the housing (2) guiding this component are provided with a coating.

9. The sealing system according to Claim 8, **characterised in that** a PVD or PACVD based coating can be used.

## Revendications

1. Système d'étanchéité d'un dispositif de passage d'un fluide notamment dans le domaine de la haute pression, comprenant un corps (2) ayant un trou (13), une pièce (5) qui y est montée oscillante et une chambre (3) sous pression formée dans le trou (13) et pouvant être alimentée en le fluide, dans lequel une étanchéité (17) supplémentaire est formée par le corps (2) et un disque (12) de pression entourant la pièce (5), dans lequel la pièce (5) pouvant osciller dans le trou (13) est constituée sous la forme d'une aiguille de soupape et peut être poussée sur un siège (8) de soupape du corps (2) et, dans cet état fermé poussé, la chambre (3) sous pression est formée entre le corps (2) ayant le trou (13), la pièce (5) et un élément (14) d'étanchéité entourant la pièce (5), dans lequel l'étanchéité (17) supplémentaire est formée par deux surfaces (15a, 15b) d'étanchéité opposées du corps (2) et du disque (12) de pression, **caractérisé en ce que**
l'étanchéité (17) supplémentaire est une étanchéité (17) métallique et **en ce qu'**un angle d'inclinaison des surfaces d'étanchéité entre elles s'écarte d'un petit montant (16) angulaire, grâce à quoi, du côté intérieur, il est provoqué la formation d'un bord (17') d'étanchéité circulaire.

2. Système d'étanchéité suivant la revendication 1, **caractérisé en ce que** l'élément (14) d'étanchéité est de préférence enfoncé dans le trou (13) cylindrique du corps (2) et délimite par l'un de ses côtés (14a) frontaux la chambre (3) sous pression, de manière à être soumis au fluide dans l'état de fonctionnement.

3. Système d'étanchéité suivant la revendication 1, **caractérisé en ce que** l'élément (14) d'étanchéité est constitué annulairement en ayant des côtés frontaux, s'étendant coniquement, dont la conicité est telle que l'élément d'étanchéité peut être poussé d'une manière étanche sur une surface (18) d'appui constituée coniquement de manière correspondante du disque (12) de pression.

4. Système d'étanchéité suivant l'une ou plusieurs revendications 1 à 3, **caractérisé en ce que** l'élément (14) d'étanchéité est en une matière plastique sous forme d'une étanchéité souple.

5. Système d'étanchéité suivant l'une des revendications 1 à 4, **caractérisé en ce que** l'élément (14) d'étanchéité pour le corps (2), qui entoure soi-même la pièce (5), est inséré dans le trou (13) par la chambre (3) sous pression, dans lequel à cet effet le corps (2) peut être ouvert au trou (13) par un bloc (8') de siège de soupape.

6. Système d'étanchéité suivant la revendication 1, **caractérisé en ce que** les surfaces (15a, 15b) d'étanchéité opposées font un angle de préférence de 30° à 60° avec l'axe longitudinal du trou (13) .

7. Système d'étanchéité suivant l'une ou plusieurs revendications 1 à 6, **caractérisé en ce qu'**un élément (14) d'étanchéité au côté frontal délimitant la chambre (3) de pression est associé à un élément de renfort, de préférence une bague (7) métallique, afin de protéger la partie (14a) extérieure de l'élément (14) d'étanchéité.

8. Système d'étanchéité suivant l'une des revendications 1 à 7, **caractérisé en ce que** la pièce (5) montée mobile et/ou le trou (13'), guidant celle-ci, du disque (12) de pression ou du corps (2) est pourvue d'un revêtement.

9. Système d'étanchéité suivant la revendication 8, **caractérisé en ce qu'**un revêtement à base de PVD ou de PACVD peut être utilisé.
